# EUROPÄISCHE PATENTANMELDUNG

(11) **EP 0 530 600 A1**
(43) Veröffentlichungstag der Anmeldung: **10.03.1993**
(21) Anmeldenummer: 92114201.4
(22) Anmeldetag: 20.08.1992
(51) Int. Cl.: C09K 17/00, C04B 28/24

(54) **Mittel für die Verfestigung von Fels, Lockergestein, porösen natürlichen und künstlichen Steinen sowie Böden und Verfahren zur Verfestigung unter Verwendung dieses Mittels**

(30) Priorität: 28.08.1991 CH 2524/91
(71) Anmelder: Sika AG, vorm. Kaspar Winkler & Co., CH-8048 Zürich (CH)
(72) Erfinder: Bürge, Theodor A., CH-8954 Geroldswil (CH); Mai, Dieter, CH-8865 Bilten (CH)
(74) Vertreter: Blum, Rudolf Emil Ernst

(57) **Zusammenfassung**

Mittel für die Verfestigung und Abdichtung von Fels, Lockergestein, porösen natürlichen und künstlichen Steinen sowie Böden, das Kieselsäuresol enthält oder daraus besteht und alleine oder in Kombination mit weiteren Komponenten verpumpt bzw. unter Druck verpresst wird. Hierbei können die Komponenten mit dem Kieselsäuresol vorgemischt oder getrennt injiziert werden, wobei sie nach einer vorbestimmten Kontaktzeit oder in situ zur Reaktion gelangen und hierdurch die Verfestigung bzw. Abdichtung bewirken.

## Beschreibung

Ziel der vorliegenden Erfindung war es, ein Mittel für die Verfestigung von Fels, Lockergestein, porösen natürlichen und künstlichen Steinen sowie Böden zu entwickeln. Dieses Mittel soll in der Lage sein in Poren oder Risse eines sehr geringen Durchmessers einzudringen und somit die Verfestigung von solchen Gesteinen erlauben, die mit bisher zu diesem Zwecke eingesetzten Verfestigungsmitteln, wie z.B. Zementteilchen oder wässrigen Dispersionen von Siliciumdioxid (Mikrokieselsäure) nicht verfestigt werden konnten, weil die entsprechenden Teilchen immer noch zu grob waren, um in die feinsten Poren oder Risse einzudringen.

Ein weiteres Ziel der vorliegenden Erfindung war es ein entsprechendes Mittel für die Verfestigung von Fels, Lockergestein, porösen natürlichen und künstlichen Steinen sowie von Böden zur Verfügung zu stellen, das bei seiner Anwendung sowohl physiologisch unschädlich ist und auch bei seiner Anwendung für die Umwelt unbedenklich ist, d.h. keine Schadstoffe wie Schwermetallionen oder hohe Mengen an Alkalimetallionen an die Umwelt abgibt. Der letztgenannte Gesichtspunkt ist insbesondere dort von Bedeutung, wo entsprechende Mittel zur Verfestigung von Böden eingesetzt werden, um diese als Baugrund bei der Errichtung von Gebäuden zu stabilisieren bzw. um bei Ackerböden die Errosion durch den Einfluss von Wind und Wasser zu vermindern.

Als Bodenstabilisatoren oder Bodenverfestiger wurden bisher Bindemittel, wie Zement, Bitumen, Gemische von Calciumsalzen, Wasserglas (wässrige Lösungen von Natriumsilicat), organisch katalysiertes Wasserglas und Chromlignin verwendet. Diese Materialien sind aufgrund der Abgabe von Chromionen oder der Abgabe hoher Mengen an Natriumionen bzw. ihrer stark alkalischen Reaktion keineswegs unbedenklich. Zur Bodenverfestigung wurden auch schon organische Produkte, wie Acrylamid verwendet, das direkt im Boden durch Zusatz von Persulfat und Natriumthiosulfat polymerisiert wurde. Durch diese Polymerisationsinitiatoren tritt jedoch eine extrem starke Schädigung der Bodenfauna auf, und ausserdem sind die entsprechenden Produkte aufgrund ihrer hohen Kosten unvorteilhaft bzw. zur Stabilisierung von agrarisch genutzten Böden nicht verwendbar.

Zement und zementhaltige Mischungen wurden bisher in grossem Ausmass zur Verfestigung von Lockergestein und Fels, im Tunnelbau, zur Gebäudeunterfangung und zum Abdichten gegen eindringendes Wasser, beispielsweise zur Baugrubenabdichtung, zur Staumauerabdichtung, zur Abdichtung des Austretens von Schadstoffen aus Deponien und zur Sanierung von Abwasserkanälen eingesetzt. Ein wesentlicher Nachteil bei der Verwendung von Zement und zemententhaltenden Materialien in diesen Arbeitsgebieten besteht darin, dass die Zementteilchen nicht fein genug sind und dass somit Gesteine mit besonders feinen Poren, wie z.B. kataklastische Gesteine, wie Breccien, Mylonite und Phyllonite mit Abdichtungsmitteln auf Zementbasis aufgrund der zu groben Korngrösse der Zementteilchen nicht abdichtbar sind, weil die Zementteilchen in die ganz feinen Poren nicht eindringen können. Ein weiterer Nachteil von Verfestigungs- und Abdichtungsmitteln auf Basis von Zement besteht darin, dass dieser durch in der Umgebung anwesende Stoffe verändert werden kann, beispielsweise Magnesiumionen, und somit nach einiger Zeit seine verfestigende Wirkung bzw. abdichtende Wirkung zumindestens teilweise verlieren kann.

Es ist auch bereits bekannt, amorphes Siliciumdioxid als wässrige Dispersion bei der Verfestigung von Fels, Lockergestein, porösen natürlichen und künstlichen Steinen sowie Böden zu verwenden, insbesondere um die Standfestigkeit zu erhöhen und das Aus- oder Eindringen von wässrigen Lösungen zu verhindern. Das amorphe Siliciumdioxid wird dabei im allgemeinen als Mikrokieselsäure oder Silica fume eingesetzt, welches ein Nebenprodukt der Herstellung von Silicium und Siliciumlegierungen ist. Es handelt sich dabei um eine Flugasche, die aus an Elektrofiltern abgeschiedenen Teilchen aus rasch gekühlten Rauchgasen besteht. Diese Flugasche unterscheidet sich sowohl in der chemischen Zusammensetzung wie auch in der Teilchengrösse von den bekannten Flugaschen aus thermischen Kraftwerken. So beträgt der Gehalt an SiO₂ in der Regel mehr als 80 %, der verbrennbare Anteil liegt unter 1 %. Das Material besteht aus amrophem Kieselglas, und unter dem Elektronenmikroskop ist die absolut kugelige Form der Partikel sichtbar. Der Durchmesser der Teilchen liegt unter 0,2 µm. Die spezifische Oberfläche, durch Adsorption nach Brunauer, Emmet und Teller bestimmt, liegt im allgemeinen zwischen 15 und 20 m²/g, in speziellen Fällen kann sie jedoch bis zu 400 m²/g betragen.

Dennoch sind auch bei dieser Mikrokieselsäure die Teilchen noch zu grob um in feinste Poren, beispielsweise solche von kataklastischen Gesteinen einzudringen und dementsprechend sind diese auch mit Dispersionen von Mikrokieselsäure nicht abdichtbar. Ausserdem sind entsprechende Slurries von Mikrokieselsäure und Silica fume aufgrund der Absetzung der dispergierten amorphen Siliciumdioxidteilchen schlecht lagerfähig und auch die Injektion solcher Mittel in Fels, das Lockergestein oder den Boden ist aufgrund der Teilchengrösse der Mikrokieselsäure schwierig. Ausserdem erfolgt bei der Verwendung von Silica fume Slurry eine ausserordentlich starke Abrasion der Geräte, wie beispielsweise Pumpen, Dosiereinrichtungen, Spritzdüsen, Injektionslanzen.

Ueberraschenderweise hat es sich jetzt gezeigt, dass diese Nachteile bisher bekannter Mittel für die Verfestigung von Fels, Lockergestein, porösen natürlichen und künstlichen Steinen sowie Böden dadurch vermieden werden können, dass man zu diesem Zwecke ein Mittel verwendet, welches ein Kieselsäuresol enthält oder daraus besteht.

Ein Gegenstand der vorliegenden Erfindung ist daher ein Mittel für die Verfestigung von Fels, Lockergestein, porösen natürlichen und künstlichen Steinen sowie Böden, das dadurch gekennzeichnet ist, dass es ein Kieselsäuresol enthält oder daraus besteht.

Kieselsäuresole sind bereits bekannt, sie stellen wässrige, kolloidale Lösungen von amorphem Siliciumdioxid (SiO₂) dar, in welchen das Siliciumdioxid in Form von untereinander unvernetzten, kugelförmigen Einzelpartikeln vorliegt, die an der Oberfläche Hydroxylgruppen tragen.

Bezüglich der physikalischen und chemischen Eigenschaften der Kieselsäuresole und der Verfahren zu deren Herstellung sei auf Ullmanns Encyklopädie der Technischen Chemie, 4. Auflage, Band 21, Jahrgang 1982, Seiten 456-458, verwiesen.

In den Kieselsolen haben die hydratisierten kolloidalen SiO₂ Partikel im allgemeinen Partikelgrössen im Bereich von 7-50, meistens 7-40 nm. Diese Partikel sind also um Grössenordnungen kleiner als beispielsweise die Partikel von Mikrokieselsäure, die, wie bereits erwähnt, Teilchendurchmesser bis zu 0,2 µm aufweisen und somit haben die Kieselsäuresole die Fähigkeit, in extrem kleine Ritzen, Poren oder Spalten einzudringen. Sie sind damit zur Verfestigung solcher Gesteinsarten verwendbar, die mit entsprechenden Mitteln auf Basis von Mikrokieselsäure oder Zement nicht verfestigbar sind, wie z.B. kataklastischen Gesteinen, wie Breccien, Mylonite und Phyllonite.

Im Gegensatz zu wässrigen Dispersionen von Mikrokieselsäure zeigen Kieselsäuresole aufgrund der Tatsache, dass sie kolloidale Lösungen und nicht Dispersionen sind, auch keine Neigung zur Absetzung von Partikeln bei der Lagerung. Wie bereits in Ullmanns Encyklopädie der Technischen Chemie, 4. Auflage, Band 21, Seiten 256 erwähnt wird, sind Kieselsole, die bis zu 50 Gew.-% SiO₂ enthalten, jahrelang haltbar.

Die hydratisierten SiO₂ Partikel der erfindungsgemässen Mittel haben im allgemeinen spezifischen Oberflächen von etwa 40-700 m²/g, vorzugsweise spezifische Oberflächen von 50-500 m²/g bei erfolgter Bestimmung der spezifischen Oberfläche nach der BET-Methode (Adsorption nach Brunauer, Emmet und Teller).

Bei der Verwendung der erfindungsgemässen Mittel für die Verfestigung von Fels, Lockergestein, porösen natürlichen und künstlichen Steinen sowie Böden, werden diese in die zu verfestigenden Untergründe injiziert und darauf erfolgt dann eine Umwandlung des Kieselsäuresols in Kieselsäuregel und zwar entweder aufgrund chemischer Bestandteile, die bereits in dem Untergrund vorhanden sind oder auch die Anwesenheit einer zweiten Komponente, die entweder vor dem Kieselsol oder nach dem Kieselsol oder gleichzeitig mit dem Kieselsol ebenfalls in den Untergrund injiziert wurde.

Es ist bekannt, dass Kieselsäuresole relativ instabile Systeme sind und dass sie durch die Zugabe von Elektrolyten oder durch die Veränderung des pH-Wertes in ein Gel umgewandelt werden können. Es kann daher angenommen werden, dass die unerwarteten Vorteile bei der Zugabe des erfindungsgemässen Mittels beim Verfahren zur Verfestigung von Fels, Lockergesteinen, porösen natürlichen und künstlichen Steinen sowie Böden auf diese Gelbildung zurückzuführen sind.

Verschiedene Elektrolyte, die bei Kontakt mit dem Kieselsol dieses in ein Kieselgel umwandelt, sind häufig in den zu verfestigenden Felsen, Lockergesteinen und Böden bereits vorhanden, wie z.B. entsprechende Verbindungen des Aluminiums, Eisens, Calciums oder Magnesiums. Bei Anwesenheit solcher, die Ueberführung des Kieselsols in ein Kieselgel fördernden Bestandteiles in dem zu verfestigenden Untergrund, erfolgt bereits kurze Zeit nach der Injektion der erfindungsgemässen Mittel eine entsprechende Gelbildung.

Sind jedoch in dem zu verfestigenden Untergrund keine Komponenten enthalten, welche die rasche Ueberführung des Kieselsols in das Kieselgel fördern und/oder wird eine besonders rasche Gelbildung bzw. die schnelle Ausbildung eines relativ festen Gels gewünscht, dann ist es vorteilhaft, bei dem Verfestigungsverfahren eine zweite Komponente anzuwenden, welche die Ueberführung des Kieselsols in das Kieselgel hervorruft oder beschleunigt. Diese zweite Komponente wird entweder unmittelbar vor der Verpressung des Kieselsols mit diesem vermischt oder sie kann getrennt von dem Kieselsol vor diesem, nach diesem oder gleichzeitig mit diesem in den Untergrund verpresst werden.

Gemäss einer bevorzugten Ausführungsart stellt das erfindungsgemässe Mittel ein zweikomponentig verpacktes Mittel dar, wobei die eine Komponente das Kieselsäuresol enthält oder daraus besteht, die zweite, getrennt von dem Kieselsäuresol verpackte Komponente diejenige ist, welche die Ueberführung des Kieselsols in das Kieselgel beschleunigt.

Die entsprechende zweite Komponente enthält einen Elektrolyten, und sie ist vorzugsweise eine entsprechende Elektrolytlösung und/oder eine Aufschlämmung eines Calciumionen-Donators.

Gemäss einer bevorzugten Ausführungform der Erfindung enthält die zweite Komponente mindestens einen Bestandteil, der aus der Gruppe ausgewählt ist, welche die folgenden Bestandteile umfasst: Wasserlösliche Salze von Aluminium, Eisen, Calcium oder Magnesium, beispielsweise Alkalialuminatlösungen, sowie Calciumionen-Donatoren, beispielsweise Aufschlämmungen von Zement, Calciumoxid, Calciumhydroxid sowie gebranntem Oelschiefer.

Ein typisches Beispiel für eine entsprechende zweite Komponente, welche die Ueberführung des Kieselsols in das Kieselgel fördert, ist eine Alkalialuminatlösung, vorzugsweise eine Kaliumaluminatlösung. Die entsprechenden Aluminatlösungen sind vorzugsweise wässrige Aluminatlösungen mit Feststoffanteilen im Bereich von 20-50 Gew.-%, insbesondere 30-45 Gew.-%, beispielsweise etwa 40 Gew.-%.

Bevorzugte Beispiele für eine derartige zweite Komponente, auf Basis von Calciumionen-Donatoren, sind entsprechende aufgeschlämmte calciumhaltige Verbindungen, die in Form von Slurries zur Injektion in den Boden geeignet sind. Typische Beispiele für derartige Calciumionen-Donatoren in Slurry-Form sind wässrige Aufschlämmungen von gelöschtem Kalk und Portlandzement.

Eine besonders rasche Ueberführung des Kieselsäuresols in das Kieselsäuregel in dem zu verfestigenden Untergrund ist dann erreichbar, wenn als weitere Komponente sowohl eine Elektrolytlösung, wie z.B. eine Kaliumaluminatlösung, als auch eine Aufschlämmung eines Calciumionen-Donators, beispielsweise von gelöschtem Kalk oder Portlandzement in den zu verfestigenden Untergrund injiziert wird. Gegebenenfalls kann die Elektrolytlösung mit der Aufschlämmung des Calciumionen-Donators unmittelbar vor dem Verpressen vermischt werden.

Durch die kombinierte Verwendung einer Elektrolytlösung mit einer Calciumionen-Donator als zweite Komponente werden in dem zu verfestigenden Untergrund rasch hohe Druckfestigkeiten ausgebildet.

Die in den erfindungsgemässen Mitteln eingesetzten Kieselsäuresole weisen im allgemeinen einen Gehalt an Siliciumdioxid, berechnet als Trockengewicht und bezogen auf das Sol von 5-60 Gew.-%, insbesonders 15-50 Gew.-% auf. Speziell bevorzugt besitzen die entsprechenden Kieselsäuresole, einen Gehalt an SiO₂ von 35-45 Gew.-%, beispielsweise etwa 40 Gew.-%.

Die Kieselsole sind vorzugsweise wässrige Sole. Gegebenenfalls können jedoch der Kieselsole in wasserlöslichen organischen Lösungsmitteln, wie niederen Alkoholen oder Aceton, oder in Wasser und wasserlöslichen organischen Lösungsmitteln verwendet werden.

Wenn bei der Verfestigung des Untergrundes als zweite Komponente eine Elektrolytlösung verpresst wird, beispielsweise eine Alkalialuminatlösung, dann ist es im allgemeinen vorteilhaft, wenn gewichtsmässig und jeweils berechnet auf dem Feststoff des Kieselsäuresols bzw. der Elektrolytlösung pro Gew.-Teil SiO₂ 0,5 Gew.-Teile bis 2 Gew.-Teile an dem Elektrolyten, insbesondere pro Gew.-Teil SiO₂ etwa 1 Gew.-Teil an dem Elektrolyten verpresst wird.

Bei Verwendung eines Calciumionen-Donators zusätzlich zu dem Elektrolyten oder anstelle des Elektrolyten wird dieser im allgemeinen bezogen auf das Trockengewicht des mit dem Kieselsol verpressten SiO₂ in einer Menge von 0,1 - 1,5 Gew.-Teile Calciumverbindung pro Gew.-Teil SiO₂, insbesondere 0,2 - 1 Gew.-Teilen Calciumverbindung pro Gew.-Teil SiO₂ und speziell bevorzugt 0,3 bis 0,6 Gew.-Teilen Calciumverbindung pro Gew.-Teil SiO₂ eingesetzt.

Die erfindungsgemässen Mittel bzw. das erfindungsgemässe Verfahren zur Verfestigung von Fels, Lockergestein, porösen natürlichen und künstlichen Steinen sowie Böden ist in so vielen Einsatzgebieten anwendbar, dass hier nur einige Beispiele erwähnt seien.

### Anwendung in Grund-, Berg- und Tunnelbau:

- Verfestigung von Lockergestein
- Abdichten gegen eindringendes Wasser
- Baugrubenabdichtungen
- Rissverpressungen
- Gebäudeunterfangungen.

### Anwendung im Erdbau:

- Dammabdichtung
- Injektionspfähle
- Staumauerabdichtungen.

### Umweltsanierung und Erosionsverhinderung:

- Sanierung von Deponien
- Verfestigung von Altlasten
- Sanierung von Abwässer-Kanälen
- Verfestigung von Küstenlinien
- Verhinderung der Erosion von Agrarböden
- Stabilisierung von Sanddünen.

Die Erfindung wird anhand von Beispielen näher erläutert:

### Beispiel 1

In ein Mylonite-Gestein aus der Grand Dixence wurde ein 40 Gew.-%iges wässriges Kieselsäuresol bis zur Sättigung injiziert. Die Druckfestigkeit des entsprechenden Gesteins wurde vor der Injektion und 24 Stunden nach der Injektion bestimmt. Die verwendeten Gesteinsproben besassen eine Porosität von 10 % Porenvolumen, bezogen auf das Gesteinsvolumen bzw. 40 % Porenvolumen, bezogen auf das Gesteinsvolumen.

Die mit dem erfindungsgemässen Mittel erzielten Ergebnisse sind in der folgenden Tabelle I zusammengestellt:

**Tabelle I**

| | Druckfestigkeit | |
|---|---|---|
| | vor Injektion | nach Injektion |
| Gesteinsprobe 1 Porosität 10 % | 10 MPa | 30 MPa |
| Gesteinsprobe 2 Porosität 40 % | 2 MPa | 5 MPa |

Die in diesem Beispiel erzielte starke Erhöhung der Druckfestigkeit ist deshalb sehr überraschend, weil das hier getestete Mylonite-Gestein zu den kataklastischen Gesteinen gehört, die mit Zement oder wässrigen Dispersionen von Mikrokieselsäure nicht verfestigt werden können, da die Poren dieses Gesteins zu klein sind, um ein Eindringen des grössten Teils der Zementkörner bzw. der Mikrokieselsäure zu ermöglichen.

### Beispiel 2

Anhand dieses Beispiels wird die Verfestigung einer Sandschüttung durch Injektion eines erfindungsgemässen zweikomponentigen Mittels erläutert, in welchem die erste Komponente ein wässriges Kieselsäuresol und die zweite Komponente eine Elektrolytlösung ist.

Die beiden Komponenten wurden mit einer Injektionslanze unter Verwendung von Dosierpumpen verpresst. Die erste Komponente und die zweite Komponente wurde mit zwei getrennten Dosierpumpen in die Spitze der Injektionslanze eingepresst, wo die Vermischung der beiden Komponenten beim Injizieren erfolgte.

Die erste Komponente war ein Kieselsäuresol mit 40 Gew.-% Feststoffanteil und die zweite Komponente eine Kaliumaluminatlösung, ebenfalls mit 40 Gew.-% Feststoffanteil.

In der Injektionslanze wurden 100 Gew.-Teile des Kieselsäuresols mit 100 Gew.-Teilen der Kaliumaluminatlösung vermischt und in eine unverfestigte lockere Sandschüttung injiziert. Das Sandvolumen, in welches die je 100 Gew.-Teile des Kieselsäuresols bzw. der Kaliumaluminatlösung injiziert wurden, betrug 10 Liter.

20-25 Minuten nach der Injektion begann die Gelierung und nach 40-45 Minuten war ein harter Gelzustand erreicht.

### Beispiel 3

Anhand dieses Beispiels wird die kombinierte Verwendung des Kieselsäuresols mit Calciumionen-Donatoren näher erläutert.

Es wurden hochreaktive Calciumionen-Donatoren, nämlich Aufschlämmungen von Zementen bzw. gelöschten Kalk (Ca(OH)₂) bzw. gebranntem Oelschiefer in Wasser getestet. Die Aufschlämmung der Calciumionen-Donatoren und das Kieselsäuresol wurden mit Hilfe von zwei getrennten Dosierpumpen zugefügt und die beiden Komponenten gelangen erst kurz vor dem Lanzenende über einen statischen Mischer oder direkt in den zu verfestigenden Untergrund und reagieren dort zu einem festen Endprodukt.

100 Gew.-Teile 40 %iges Kieselsäuresol und 100 Gew.-Teile Kaliumaluminatlösung mit 40 % Feststoff-Anteil wurden mit 20 Gew.-Teilen eines Calciumionen-Donators versetzt und mit 400 Gew.-Teilen eines Sandes bzw. eines Kalkbrechsandes vermischt, wobei erste Verfestigungen innerhalb von 10 bis 25 Minuten eintraten.

Folgende Druckfestigkeiten konnten damit bereits nach 24 Stunden resp. 7 Tagen erzielt werden:

**Tabelle II**

| Calcium-Donator | Druckfestigkeiten nach 24 h und 7 Tagen | | | |
|---|---|---|---|---|
| | Sand 0-1 mm | | Kalkbrechsand 0,5-3mm | |
| | 24 Std. | 7 Tage | 24 Std. | 7 Tage |
| kein | 1,9 MPa | 2,8 MPa | 2,0 MPa | 2,2 MPa |
| gelöschter Kalk Ca(OH) | 3,3 MPa | 10,4 MPa | 3,9 MPa | 4,2 MPa |
| Portlandzement | 4,6 MPa | 9,1 MPa | 5,0 MPa | 6,2 MPa |
| Gemisch aus gleichen Teilen eines gebrannten Oel schiefers und Portlandzement | 3,8 MPa | 5,2 MPa | 4,6 MPa | 5,4 MPa |

## Patentansprüche

1. Mittel für die Verfestigung von Fels, Lockergestein, porösen natürlichen und künstlichen Steinen sowie Böden, dadurch gekennzeichnet, dass es ein Kieselsäuresol enthält oder daraus besteht.

2. Mittel nach Anspruch 1, dadurch gekennzeichnet, dass das Kieselsäuresol eine Partikelgrösse im Bereich von 7 bis 50 nm und eine spezifische Oberfläche von 50 bis 700 m²/g, insbesondere 50 bis 500 m²/g, aufweist.

3. Mittel nach Anspruch 1 oder 2, dadurch gekennzeichnet, dass es einen Gehalt von Siliciumdioxid, bezogen auf das Trockengewicht, von 5 bis 60 Gew.-%, insbesondere 15 bis 50 Gew.-%, aufweist.

4. Mittel nach einem der Ansprüche 1 bis 3, dadurch gekennzeichnet, dass das Kieselsäuresol ein wässriges Kieselsäuresol ist.

5. Mittel nach einem der Ansprüche 1 bis 4, dadurch gekennzeichnet, dass es ein getrennt abgepacktes, mindestens zweikomponentiges Mittel ist, wobei die eine Komponente das Kieselsäuresol darstellt und die zweite Komponente einen Elektrolyten enthält, vorzugsweise eine Elektrolytlösung oder eine Aufschlämmung eines Calciumionen-Donators.

6. Mittel nach Anspruch 5, dadurch gekennzeichnet, dass es drei getrennt voneinander abgepackte Komponenten umfasst, nämlich Kieselsäuresol, Elektrolytlösung und die Aufschlämmung des Calciumionen-Donators, wobei die Elektrolytlösung vorzugsweise in Wasser gelöste Salze von Aluminium, Eisen, Calcium oder Magnesium enthält, speziell bevorzugt eine Alkalialuminatlösung, beispielsweise eine Kaliumaluminatlösung und der Calciumionen-Donator eine wässrige Aufschlämmung ist, bzw. vor seiner Verwendung mit Wasser aufgeschlämmt wird, und wobei der Calciumionen-Donator vorzugsweise Zement, Calciumoxid, Calciumhydroxid oder gebrannter Oelschiefer ist.

7. Verfahren zur Verfestigung von Fels, Lockergestein, porösen natürlichen und künstlichen Steinen sowie Böden unter Verwendung des Mittels gemäss einem der Ansprüche 1-6, dadurch gekennzeichnet, dass man das Mittel bzw. die Komponenten des Mittels mit dem zu verfestigenden Material in Berührung bringt, vorzugsweise unter Druck einpresst.

8. Verfahren nach Anspruch 7, dadurch gekennzeichnet, dass man ein zweikomponentiges Mittel verwendet, wobei die Komponenten unmittelbar vor, während oder nach dem Verpressen miteinander vermischt werden oder die Komponenten nacheinander in das zu verfestigende Material eingepresst werden, wobei das Einpressen vorzugsweise mit Hilfe von Dosierpumpen und unter Druck erfolgt.
